(19) Europäisches Patentamt
European Patent Office
Office européen des brevets

(11) **EP 0 732 798 B1**

(12) **EUROPEAN PATENT SPECIFICATION**

(45) Date of publication and mention
of the grant of the patent:
**05.12.2001 Bulletin 2001/49**

(51) Int Cl.[7]: **H02M 7/5395**

(21) Application number: **96301631.6**

(22) Date of filing: **11.03.1996**

(54) **PWM control apparatus and a system using same**

Pulsbreitenmodulationsvorrichtung und ein dieselbe nutzendes System

Appareil de contrôle à modulation de largeur d'impulsions et système utilisant celui-ci

(84) Designated Contracting States:
**CH DE FR GB IT LI NL SE**

(30) Priority: **14.03.1995 JP 5395995**

(43) Date of publication of application:
**18.09.1996 Bulletin 1996/38**

(73) Proprietor: **Hitachi, Ltd.**
**Chiyoda-ku, Tokyo 101 (JP)**

(72) Inventors:
• **Iwaji, Yoshitaka, Oonuma-ryo E0720**
**Hitachi-shi, Ibaraki 316 (JP)**
• **Okuyama, Toshiaki**
**Naga-gun, Ibaraki 319-11 (JP)**
• **Ikimi, Takashi, Oonuma-ryo E0518**
**Hitachi-shi, Ibaraki 316 (JP)**
• **Tobise, Masahiro**
**Hitachinaka-shi, Ibaraki 312 (JP)**

(74) Representative: **Calderbank, Thomas Roger et al**
**MEWBURN ELLIS**
**York House**
**23 Kingsway**
**London WC2B 6HP (GB)**

(56) References cited:
• CONFERENCE RECORD OF THE INDUSTRY APPLICATIONS SOCIETY ANNUAL MEETI, SEATTLE, OCT. 7 - 12, 1990, vol. VOL. 1, no. MEETING 25, 7 October 1990, INSTITUTE OF ELECTRICAL AND ELECTRONICS ENGINEERS, pages 703-710, XP000204099 SALMON J C: "SELECTING STEPPED REFERENCE WAVEFORMS FOR PWM INVERTER DRIVES TO MINIMIZE THE CURRENT DISTORTION"
• CONFERENCE RECORD OF THE INDUSTRY APPLICATIONS SOCIETY ANNUAL MEETING. (IAS), SAN DIEGO, OCT. 1 - 5, 1989, vol. PART 1, 1 October 1989, INSTITUTE OF ELECTRICAL AND ELECTRONICS ENGINEERS, pages 753-759, XP000093259 SALMON J C ET AL: "A 3-PHASE PWM STRATEGY USING A STEPPED REFERENCE WAVEFORM"

Remarks:
The file contains technical information submitted after the application was filed and not included in this specification

**Description**

The present invention relates to a pulse width modulation (PWM) control for use in power conversion apparatuses such as inverters, converter or the like, and in particular, it relates to a high precision and high performance PWM control apparatus for use in power conversion apparatuses operating with low switching frequencies, and a system using the same.

As a typical example of the conventional PWM control methods, there is a triangle wave comparison method (sub-harmonic method) which compares a command value with the triangle wave carrier to produce corresponding PWM pulses. Currently, this conventional method has been digitized to perform its PWM control through ON/OFF of bit by computing a pulse width corresponding to the command value for every specified period (which corresponds to a period of the carrier wave).

This conventional PWM method can be divided roughly into an asynchronous PWM control and a synchronous PWM control.

In the case where the frequency of the carrier wave is sufficiently higher than the frequency of the command value (the command value to be modulated by PWM in this invention is a cyclic function such as sine wave or the like), an asynchronous PWM control method is employed in which carrier frequency is fixed at a constant value. This method is used for general purpose inverters, mill-drive inverters, servo motors for factory automation or the like.

In the case where the frequencies of the carrier wave and of the command value are in the proximity from each other, a synchronous PWM control is utilized in which the carrier frequency is always adapted at a value which is n times the frequency of the command value, where n is integer. In this instance, in dependency on changes in the frequency of the command value, the carrier frequency and a ratio n (integer) of the frequencies between the carrier wave and the command value are caused to change accordingly. This method is used in large capacity electric conversion apparatus such as electric cars, reactive power (var) compensation equipment and the like (refer to "Self-Exciting Inverters", Chapter 6, in "Semiconductor Power Conversion Circuits", edited by Japan Electrical Engineers Society).

The asynchronous PWM control is capable of demonstrating a desired performance only when the carrier frequency is sufficiently high relative to the frequency of the command value. A required ratio n for the carrier frequency to the frequency of the command value is said to be over 10 and several times. At a ratio below this requirement, the low order harmonics will increase, and the beat phenomenon (sub-harmonic) or the like will occur, thereby substantially degrading the control performance. Should the motor be driven under such conditions, a large torque pulsation will result.

In order to solve such a problem associated with the prior art described above, the carrier frequency may be set at a frequency which is sufficiently high relative to the frequency of the command value. However, in turn, another problem will take place that the switching loss will increase to degrade the overall efficiency. In addition, in a large capacity power conversion apparatus, since semiconductor elements available for such use are limited, it is physically difficult to increase the carrier frequency as required.

On the other hand, in the case of the synchronous PWM control, even at a low carrier frequency, the harmonics and the beat phenomenon can be suppressed to some extent. However, since the carrier frequency as well as the number of pulses (a ratio of frequencies between the carrier frequency and the command value) must be switched in dependency on the frequency of the command value, there results in various problems to be solved such as complication of control circuits, an increase of pulsation (switching shock) associated with the switching of the numbers of pulses or the like.

Furthermore, when the synchronous PWM control method is used to drive the motor, since an instantaneous torque control becomes impossible, a fast system response cannot be expected. Therefore, although the synchronous PWM control may be applied without causing a trouble to such a system which is controlled by an open loop, it cannot be applied to a system which is controlled by a closed loop, for example, in the mill drive in which the instantaneous torque control is required. When applied, if ever, to such system as above, its response will be greatly delayed, thereby degrading the control performance substantially. Generally speaking, it is difficult to apply the synchronous PWM control to a system which comprises a closed loop control unit and where the frequency of the command value varies.

The main object of the present invention is to provide an asynchronous PWM control system which reduces the increase in the low order harmonics and occurrence of the beat phenomenon even when low carrier frequencies are utilized, thereby a compact, high efficiency power conversion system which will not degrade its control performance is realized.

The aforementioned problems associated with the prior art is solved by providing such measures as will be described in the following.

In an article entitled "A 3-Phase PWM Strategy Using a Stepped Reference Waveform" by J. C. Salmon et al, published in the Conference Record of the 1989 IEEE Industry Applications Society Annual Meeting(IAS), Part 1 pages 753-759 with IEEE Catalog Number 89CH2792-0, a PWM control apparatus was disclosed in which a command value for a pulse width modulator was sampled in order to compensate the command value and so compute the pulse wave to be output. This document corresponds to the precharacterising part of claim 1.

According to the present invention there is provided a PWM control apparatus having a command value generator, a pulse width modulator which, in response to a command signal from said command value generator, computes a pulse wave to be output on the basis of said command signal and a carrier waveform, and a power conversion unit including semiconductor elements which are driven by said pulse wave, further including:

means for generating said command signal by sampling said command value in successive time periods of specified length $\Delta t$,
said pulse width modulator being arranged to compute said pulse wave to be output in response to said means for generating said command signal;

characterised in that:

said means for generating said command signal is arranged to sample said command value at least twice in each successive time period, to compute an average value of said command value over each successive time period $\Delta t$ on the basis of said sampling, and to generate said command signal for each successive time period $\Delta t$ on the basis of each said average value so that said pulse width modulator computes said pulse wave to be output in response to the successive average values of said command value.

Preferably, a triangle wave carrier generator generates a triangle wave carrier signal having a cycle which is n times (n:integer) the specified period $\Delta t$.

Also, said means for generating the command signal (hereafter referred to as a 'command value compensator') may compute a value of the command value at every sampling of the command value within half cycle of the triangle wave carrier signal, namely, within a period from a plus peak to a minus peak or vice versa. The pulse width modulation unit may then compare the computed average value of the command value with the triangle wave carrier signal to calculate a pulse wave to be output on the basis of the result of comparison.

In the asynchronous PWM control, when ratio n of the frequency of the triangle carrier signal over the command value frequency becomes smaller than 10, low order harmonics and beat phenomena will increase. This is because that the command value is not reflected precisely on the pulse width produced. In the case the frequency ratio of the carrier signal over the command value is sufficiently great, the fundamental wave of the command value is presumed to be nearly constant within a unit cycle of the carrier signal. Thereby, even if at what phase shift the carrier signal and the command value are caused to intersect each other, there will result no significant difference at least in the pulse width output, thereby causing no problem.

Otherwise, when the frequencies of the carrier signal and the command value approach, since the command value will change largely within any unit period of the carrier signal, a sampled value will vary greatly due to a smallest phase shift therebetween (or due to a sample timing), which becomes asymmetric due to plus and minus cycles of the command value, and in consequence, causes the low order harmonics and beat phenomenon.

According to the above-mentioned means conceived to solve the problems associated with the prior art, the command value is compensated so that a resultant pulse width will not vary under any phase difference in frequencies between the carrier signal and the command value. For this purpose, an average value of the command value is estimated for every period $\Delta t$ which determines a corresponding pulse width thereby to regulate an output pulse width accordingly to an estimated average value.

As has been described above, even with the asynchronous PWM control in which the frequencies of the carrier signal and the command value may approach, an improved PWM control apparatus which can suppress the low order harmonics and beat phenomenon can be realized. This arrangement of the invention, since it is of the asynchronous type, can be incorporated into any closed loop control system without causing a problem.

These and other objects, advantages, and features will become more apparent from the following description taken in connection with the accompanying drawings wherein:

Fig. 1 is a schematic block diagram indicating a PWM control unit of one embodiment of the invention;
Fig. 2 is a diagram illustrative of the principles of operation of the invention;
Fig. 3 is another diagram illustrative of the principles of operation of the invention;
Fig. 4 is a schematic block diagram indicating a PWM control unit of another embodiment of the invention;
Fig. 5 is a schematic block diagram indicating one embodiment of the invention which is applied to an ac motor drive system;
Fig. 6 is a diagram indicating waveforms of simulation of a motor driven by a conventional PWM control method;
Fig. 7 is a diagram indicating waveforms of a motor driven by the PWM control method of the invention;

Fig. 8 is a schematic block diagram of one embodiment of the invention which is applied to a rectifier system;

Fig. 9 is a schematic block diagram of another embodiment of the invention which is applied to a mill drive system;

Fig. 10 is a schematic block diagram of still another embodiment of the invention which is applied to an electric car or vehicle drive system;

Fig. 11 is a schematic block diagram of further more embodiment of the invention which is applied to an elevator drive system;

Fig. 12 is a schematic block diagram of still another embodiment of the invention which is applied to a static var compensation system for use in an electric power system;

Fig. 13 is a schematic block diagram of another embodiment of the invention which is applied to a variable-speed pumped storage power system; and

Fig. 14 is a schematic block diagram of still another embodiment of the invention which is applied to a PWM cycloconverter for an induction motor drive system.

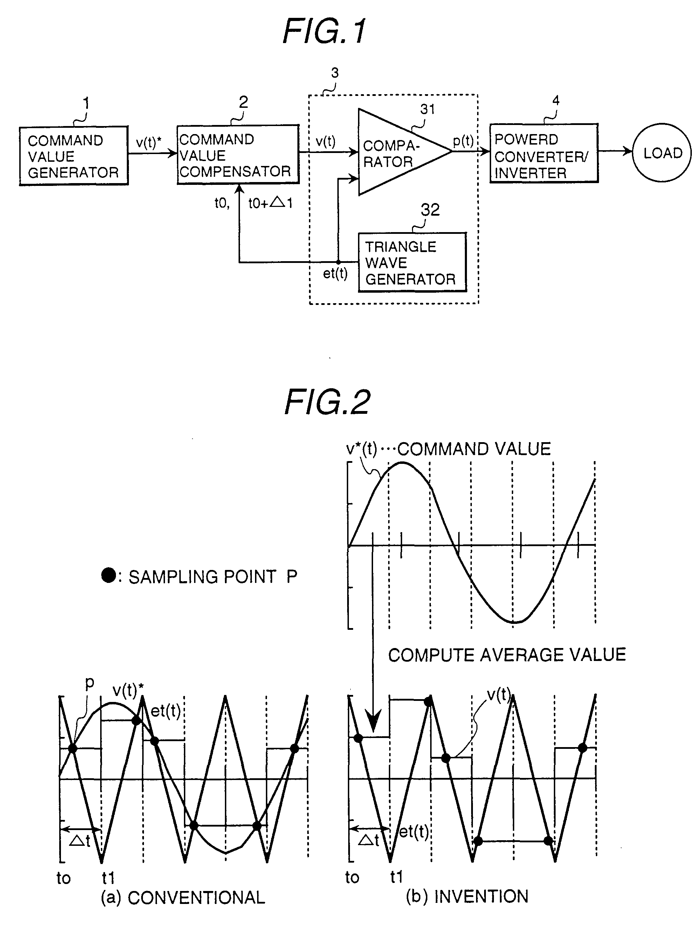

A preferred embodiment of the invention will be described with reference to Fig. 1 by way of example of an inverter control system. In the drawing of Fig. 1, respective numerals designate as follows. 1: command value generator for generating a voltage command value $v(t)^*$, 2: command value compensator for compensating the voltage command value, 3: pulse width modulation unit which compares, in its comparator 31, output $v(t)$ from the command value compensator (2) with output $et(t)$ from a triangle wave generator 32, then outputs PWM pulse $p(t)$, 4: electric conversion apparatus such as an inverter or converter which is driven by the PWM pulse $p(t)$, and 5: a load such as an ac motor or the like.

In the arrangement of Fig. 1, we define it as a synchronous PWM when a ratio n (=fc/f) between frequency fc of triangle wave $et(t)$ and frequency f of command value $v(t)^*$ is integer. In this arrangement, an inverter output current (or voltage) will not include undesirable low order harmonics nor beat components, thereby ensuring a stable control of the load.

The synchronous PWM, however, is difficult to apply for a speed control of ac motors in which the frequency f of a command value may change greatly, and it is particularly difficult to provide a high response load control with the synchronous PWM.

On the other hand, we define it as an asynchronous PWM, when the frequency ratio n is not integer. Any asynchronous PWM can be easily incorporated into a closed loop control system as a part thereof to realize a high response control system. It has been noted, however, that frequency ratio n must be at least 14-15 in the asynchronous PWM. When n becomes smaller than the value specified above, low order harmonics will increase and beat components may take place, thereby degrading the control performance substantially.

In such a case where a high response speed control of ac motors using the system as described in Fig. 1 is desired, it is necessary to use the asynchronous PWM and set the frequency ratio n at 15 or more. In such a case where a small or intermediate capacity inverter such as the general purpose inverter is used, since a high speed switching element such as IGBT can be utilized in the inverter, fc can be set at a high frequency, thereby capable of increasing the ratio n. However, in the case where a large capacity power conversion apparatus is required such as for mill drive, electric car, var compensation unit or the like, since the high speed switching elements cannot be used, fc cannot be raised sufficiently as required. In addition, setting fc at a high frequency will inevitably increase a switching loss, lower the conversion efficiency, thereby in consequence will increase an overall size of the system.

These problems described above have been recognized widely in common throughout all aspects of applications of the power conversion apparatuses having various configurations and operated by the asynchronous PWM control method. However, no adequate and fundamental solution thereto has been presented yet. Although the synchronous PWM control of the type might be one possible solution, it entails such problems: it is not suitable for the closed loop control system; it involves ear-offending noises due to pulsation of carrier frequency; a shock (pulsation) is caused at the time of switching of pulse counts, and; control circuit configuration (or software configuration in the case of digital control) becomes too complicated.

In order to solve these problems described above, the present invention proposes an improved PWM control method which is characterized further by comprising the command value compensator 2.

The principle of a compensator method of the command value compensator 2 will be described in the following with reference to Fig. 2.

In the asynchronous PWM control method, when ratio n is sufficiently large, it is assumed that a voltage command value is almost constant within any unit period of the carrier wave. In this instance, thereby any pulse output is presumed to be one precisely reflecting an instantaneous value of the corresponding voltage command. However, as ratio n becomes smaller, it no longer holds that the voltage command is assumed almost constant within the unit period of the carrier wave. Thereby, even a small phase shift between the carrier wave and the voltage command may affect an output pulse greatly so that the voltage command may not be reflected precisely on a corresponding pulse width. This will result in an increase in the low order harmonics and cause beat occurrence.

Fig. 2(a) illustrates a result of the conventional triangle wave comparison method when ratio n is small. For every half cycle Δt of triangle wave, i.e., any period from a peak to another of et(t), ON time and OFF time of a pulse corresponding thereto are determined. Triangle wave et(t) samples command value v(t)* at point P and reflects the result of sampling on a pulse width to be output corresponding thereto. In accordance with the principle of the pulse width modulation, it is necessary for any sampled value to have a value of the command value representing period Δt in which P exists. It may be an average value, for example. However, when ratio n is small as indicated in the drawing, command value v(t)* will change greatly within the period Δt, and further, sampling point P will vary significantly depending on a phase relationship between triangle wave et(t) and command value v(t)*, thereby sampling is not always ensured to collect a value of the command value representing the period Δt. As a result, a pulse width produced does not reflect precisely the command value intended.

Therefore, in order to prevent the foregoing problem to arise, it is necessary to arrange such that the triangle wave et(t) always samples a proper value of command value v(t)* which represents the period Δt to produce a pulse corresponding thereto. This object can be realized according to the invention by arranging such that an average value of the command value for each period Δt is predicted from an instantaneous value of sampling of the command value, then assuming the predicted value as a new command value (compensated), a more precise PWM control is enabled.

With reference to Fig. 2(b), there are designated command value v(t)* and a compensated command value v(t) which has been compensated by command value compensator 2 depicted in Fig. 1. As is clear from the drawing, v(t) is constant within each unit period Δt, thereby a value sampled by et(t) within a particular period Δt is ensured constantly to obtain an average value of v(t)* in that particular period Δt.

That is, in the command value compensator, when t is given by t0≤t≤t0+Δt,

$$V(t) = \frac{1}{\Delta t} \int_{t0}^{t0+\Delta t} V(t) * dt \qquad (\text{eq. 1})$$

equation 1 is calculated to obtain an average value, where command value v(t)* is given by equation 2 as follows,

$$v(t)^* = V\sin(\omega 1 \cdot t + \delta) \qquad (\text{eq. 2})$$

where, $\omega 1$: angle frequency, V: amplitude, and $\delta$: phase angle.

Then, equation 1 can be rewritten as follows.

$$v(t) = \frac{V}{\Delta t} \int_{t0}^{t0+\Delta t} \sin(\omega 1 \cdot t + \delta) \, dt$$

$$= \frac{V}{\omega 1 \cdot \Delta t} [-\cos(\omega 1 \cdot t + \delta)]_{t0}^{t0+\Delta t}$$

$$= \frac{V}{\omega 1 \cdot \Delta t} [\sin(\omega 1 \cdot t + \delta - \pi/2]_{t0}^{t0+\Delta t}$$

$$= \frac{V}{\omega 1 \cdot \Delta t} (\sin(\omega 1 \cdot (t0+\Delta t) + \delta - \pi/2) - \sin(\omega 1 \cdot t0 + \delta - \pi/2)) \qquad (\text{eq. 3})$$

Here, when v(t)* maintains the relationship given in equation 2 within period Δt (in the case of an open loop control), v(t) assumes a constant value in period Δt. However, in the case a closed loop control is required, since $\omega 1$ or V will change even in period Δt, v(t) will no longer maintain a fully constant value. Thereby, a value of v(t) calculated in such an instance is an estimated value estimated at time t.

For this reason described above, when the present system of the invention is applied to the closed loop control, some error which is not so significant may arise compared to an instance applied to the open loop control. Fluctuations within a small period $\Delta t$ of the command value, i.e., in $\omega 1$, V, $\delta$ in equation 2, however, are insignificant and negligible except for a transient period. In particular, in steady-state conditions where beat phenomenon becomes a major problem, there occurs almost no fluctuation, thereby the control method of the invention will contribute to a significant improvement even in the closed loop control system.

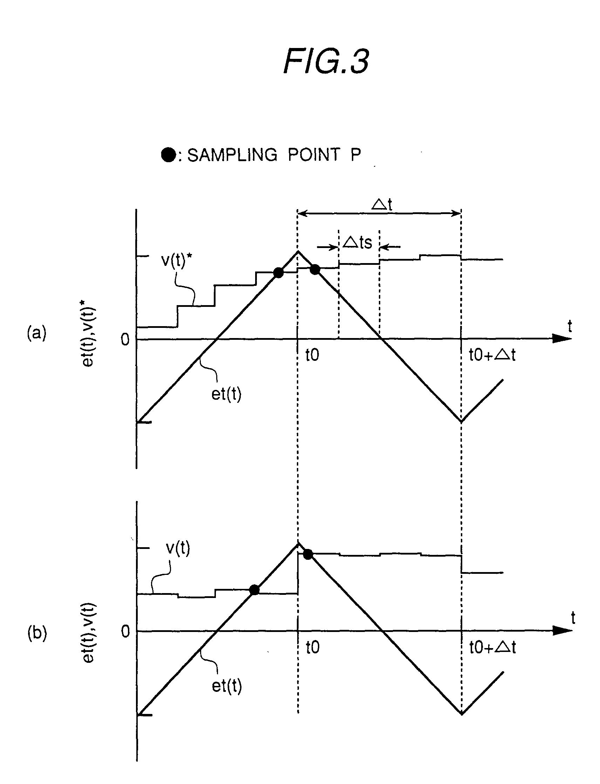

With reference to Fig. 3, there are shown waveforms of v(t)*, v(t) and et(t) which are obtained in an arrangement of Fig. 1 which comprises a digital sample value control system. A sampling period in this control system is $\Delta ts$, which in this drawing has the following relationship.

$$\Delta t = 4\Delta ts \qquad\qquad\qquad \text{(eq. 4)}$$

When applying a PWM control to a digital control system, it is alleged advantageous to set that $\Delta t=\Delta ts$, for example, as disclosed in JP-A No.3-60381. However, when carrier frequency fc is relatively low, setting that $\Delta t=\Delta ts$, will increase redundant time components, as a result, a high response performance of the system cannot be expected. Therefore, as defined in equation 4, it is adapted to hold a relationship $\Delta ts\langle\Delta t$, so that a high response characteristic of the system may be realized.

Conventionally, as indicated in Fig. 3(a), v(t)* output from the command value generator is directly compared with et(t) to produce a pulse having a width corresponding thereto. However, in the present invention, since a process of estimating an average value according to equation 1 is executed for every period $\Delta ts$, a compensated command value v(t) becomes almost constant within each $\Delta ts$ period as indicated in Fig. 3(b). Any deviation from the almost constant value is due to the use in the closed loop control system as described above. However, as is clearly seen from the drawing, sampling point P along et(t) approaches a truer value of the command value representing period $\Delta t$ than in the conventional method, thereby a significant improvement in the control performance is achieved.

As to the conventional digital type PWM control methods in which $\Delta t=\Delta ts$, there is one as disclosed in JP-A No.60-152270, in which an average value for each period $\Delta t$ is calculated in the preceding sampling period immediately prior thereto. In this case, it is rather easy to calculate the average value for each period since $\Delta t$ coincides with $\Delta ts$, however, there is a problem that a time delay $\Delta ts$ ($=\Delta t$) in calculation will increase in particular when its carrier frequency is low, thereby degrading the system response greatly.

The main feature of the invention resides in that the control method of the invention is directed to a system in which $\Delta t=k\Delta ts$, (where k$\rangle$1, or k=$\infty$ in terms of analog), and that since an average value for period $\Delta t$ is estimated basically within its period $\Delta t$, a delay of computation basically depends on $\Delta ts$ alone, and not on the carrier frequency, which is a major difference, as a result, the high response performance of the system is least impaired.

The principles and fundamental operation of the PWM control system of the invention have been described hereinabove. The PWM modulator of the invention has been described for the convenience of explanation by way of example of the analog method using the triangle wave comparison method, however, it is not limited thereto, and the digital method may also be utilized in the scope of the invention, so long as there are identified a start time t0 and an end time t0+$\Delta t$ for each period $\Delta t$ for determining a pulse width. Further, with respect to the PWM modulation, the present invention is not limited to the triangle wave comparison method which was used for explanation, and the double carrier method, sawtooth wave method and so on can be applied to any type of PWM method according to the invention as well.

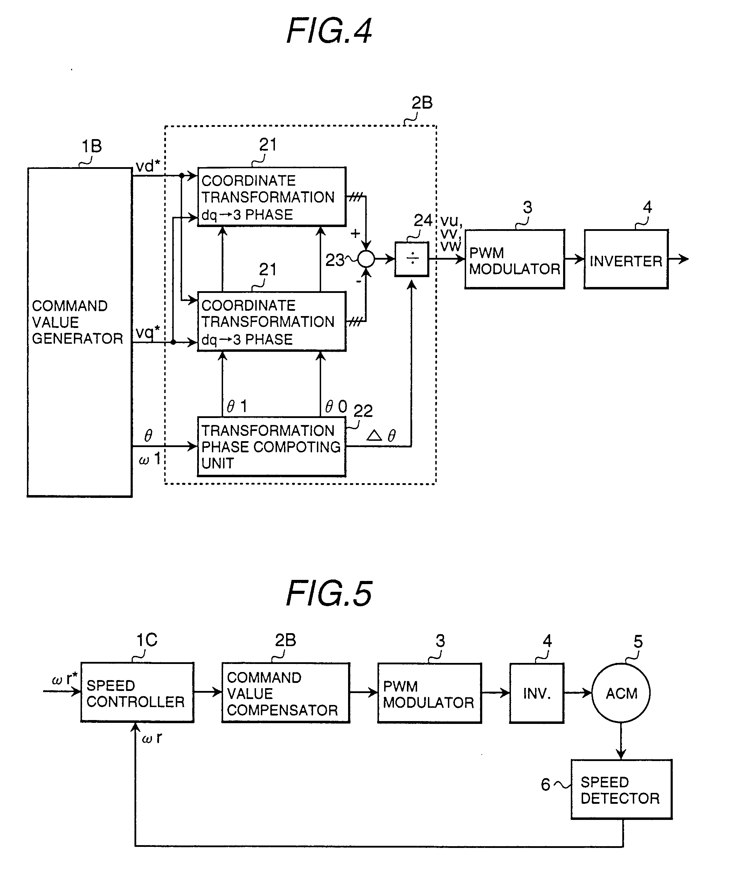

With reference to Fig. 4, another embodiment of the invention which is directed to electric conversion apparatus for dealing with three-phase ac currents will be described in the following. In the drawing of Fig. 4, numerals 3 and 4 designate the same elements with the same numbering described in Fig. 1. Other numerals and symbols designate respective elements as follows. 1B: voltage command generator which produces a voltage command to a three-phase inverter as voltage commands vd*, vq* specified on a rotating coordinates system with d q axes; 2B: voltage command compensator which executes coordinate transformation to transform voltage commands vd* and vq* supplied in dc quantities into three-phase ac quantities, and at the same time estimates an average value of the command value within each period $\Delta t$; 21:coordinate transformation unit which transforms voltage commands vd* and vq* into three-phase ac quantities in dependency on phase $\theta 0$ or $\theta 1$; 22:transformation phase computing unit which computes transformation phases $\theta 0$, $\theta 1$ as well as a very small incremental phase $\Delta\theta$ in response to command value phase $\theta$ and angle frequency $\omega 1$; 23:subtractor which computes a difference of outputs between two coordinate transformation units; and 24:divider which divides each output from 23 by $\Delta\theta$.

Basically, the voltage command compensation can be implemented through computing equation 1 (or equation 3) according to the invention. However, in the power conversion apparatus intended for controlling three-phase alternating currents, its voltage command compensation can be realized more readily by a simple computing of a coordinate transformation unit of the invention. The principles of operation of the command value compensator of the invention will be discussed in the following.

Assuming the result of equation 3 that

$$\omega1\cdot\Delta t=\Delta\theta, \ \theta=t0\cdot\omega1+\delta$$

$$\theta1=\omega1(t0+\Delta t)+\delta-\Pi/2$$

$$=\theta-\Pi/2+\Delta\theta \qquad\qquad \text{(eq. 5)}$$

$$\theta0=\omega1\cdot t0+\delta-\Pi/2$$

$$=\theta-\Pi/2$$

Then, v(t) can be expressed by equation 6 as follows.

$$v(t) = \frac{V}{\Delta\theta} \ (\sin\theta1-\sin\theta0) \qquad\qquad \text{(eq. 6)}$$

Here, phases $\theta0$, $\theta1$ are those of the start phase and end phase of period $\Delta t$ which were retarded by 90 degrees, respectively. The first and second terms in equation 6 can be obtained through coordinate transformation of vd* and vq* having a phase $\theta1$ and $\theta0$, respectively. Thereby, the command value compensation can be realized simultaneously with the coordinate transformation through the steps of: obtaining phases $\theta0$ and $\theta1$ as well as $\Delta\theta$ according to equation 5 in the transformation phase computing unit; applying coordinate transformation to vd* and vq* at respective phases obtained above; and computing same according to equation 6. As a result, computing time can be minimized.

With reference to Fig. 5, depicted is still another embodiment of the invention which is applied to an electric motor drive system which utilizes a command value compensator of the invention for speed control of ac motors. In the drawing, numeral 1C depicts a speed controller, 5 depicts a three-phase ac motor as a load, 6 a speed detector (or speed estimator in the case without a speed sensor), and other numerals depict same elements having identical numerals in Fig. 4.

In the arrangement of Fig. 5, command value generator 1C which receives speed command $\omega$r* for controlling the motor, and actual or estimated value $\omega$r indicating the number of revolutions of the motor from speed detector 6, then computes a voltage command using the vector control method or the like so that $\omega$r coincides with $\omega$r*. The voltage command is compensated in command value compensator 2B, then transmitted to PWM modulation unit 3 to be applied pulse width modulation. Inverter 4 which drives ac motor 5 is switched on/off by PWM pulses from the PWM modulation unit.

Since it becomes possible according to the invention to minimize the increase of the low order harmonics and suppress the occurrence of beat phenomenon even when fc becomes low, torque pulsation is effectively prevented from occurring , thereby motor 5 can be operated smoothly and stably. Further, since asynchronous PWM control is possible even when fc is low, a fast response operation of the motor is realized.

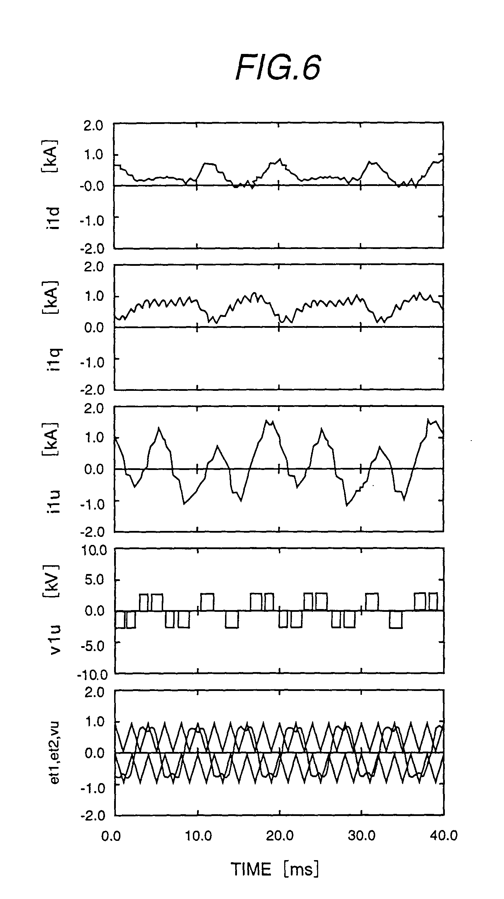

With reference to Fig. 6, depicted are conventional waveforms of excitation current ild, torque current ilq, u-phase current ilu, phase voltage vlu, and triangle waves et1, et2 as well as voltage command vu, which were obtained by simulation of an induction motor which was driven utilizing a conventional asynchronous PWM control method. Here, as its inverter, a neutral point clamped type three-level conversion apparatus was used, and for its PWM control method, the double carrier method was used. The carrier frequency was set at 500 Hz, and the frequency of the voltage command was 150 Hz. Thus, a frequency ratio n therebetween was nearly 3, thereby allowing beat phenomenon to take place. Thereby, torque current ilq is shown to contain a large pulsating component, thereby preventing the motor from operating smoothly.

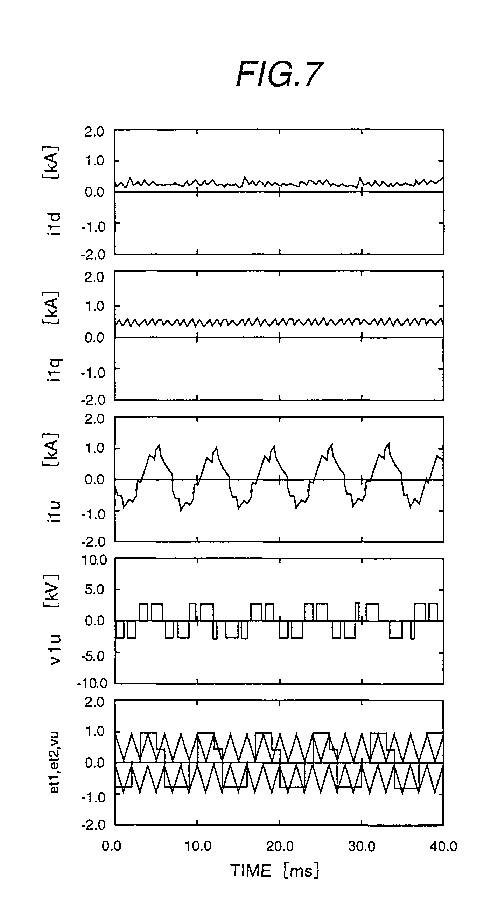

Now, with reference to Fig. 7, indicated are respective waveforms obtained by simulation under the same operating conditions as in Fig.6 where the voltage command compensation was applied according to the invention. Voltage command vu is shown to maintain a constant value for each period of rise or fall of the triangle waves. No beat phenomenon is shown to occur in the drawing, proving the effectiveness of the invention.

Some examples of control systems using the command value compensator of the invention will be described in the following.

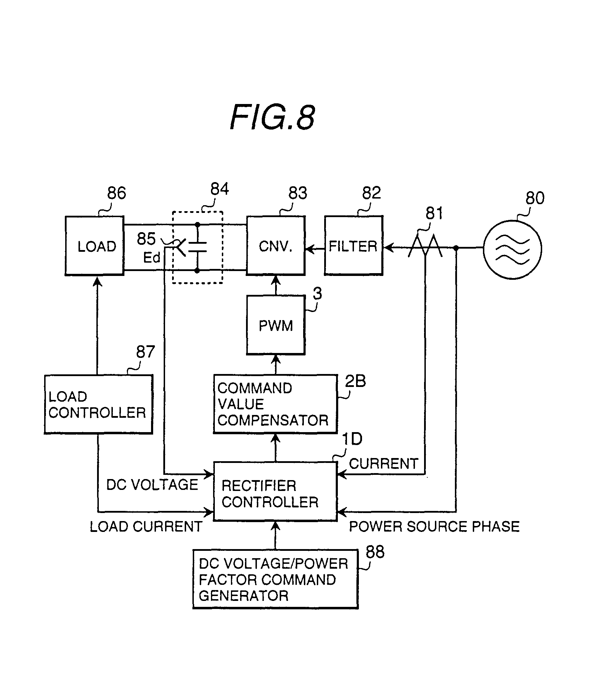

With reference to Fig. 8, indicated is a schematic block diagram of another embodiment of the invention which is applied to a PWM rectifier system for converting three-phase ac power supply into dc voltage. Respective numerals in the drawing depict constituent elements as follows. 80:three-phase ac power supply, 81:power current detector, 82: filter, 83:converter which is driven by PWM pulses from pulse width modulator 3, 84:smoothing capacitor for smoothing dc voltage output from the converter, 85:detector for detecting dc voltage Ed, 86:load to the converter (for example, inverter or the like), 87:load controller for controlling the load, 88:dc voltage/power factor command generator for generating command values on dc voltage and power factor, 1D:PWM rectifier controller which produces voltage command control input to the converter so that the dc voltage and input power factor coincide with their command values, and other numerals are the same as those depicted in Fig. 4 with the same numbering.

Generally, in the case of a large capacity converter, a synchronous type of PWM control is usually adopted for its PWM control. This is because that since the power supply frequency is constant, it is relatively easy to synchronize with the carrier frequency. However, in order to ensure synchronization with the power supply, it is prerequisite to provide a phase locked loop (PLL) circuit or the like, thereby resulting in a complicated circuit configuration of its control circuit accordingly. Further, in such an instance where a same type of device may be installed in other remote district where the power supply frequency is different, it becomes necessary to readjust and reset the system parameters.

Since the embodiment of the invention indicated in Fig. 8 is provided with command value compensator 2B, when applied to asynchronous PWM control, it can suppress low order harmonics and beat phenomenon. Thereby, in a system of Fig. 8, there is no need to provide means to synchronize the power supply frequency and the carrier frequency. Thereby, its control circuitry configuration can be simplified substantially.

Further, this embodiment of the invention can be applied advantageously also to synchronous PWM with a significant effect. In the conventional synchronous PWM control, due to a phase difference between carrier wave and voltage command wave, low order harmonics often increase. Usually, voltages and phase angles of carrier wave and power supply can be synchronized rather easily through use of PLL or the like. However, it is almost impossible to synchronize phases of voltage command (ac input voltage command to the converter) and of carrier wave, and if ever realized, it would accompany a significant control delay. However, when the converter system according to the invention is applied to the synchronous PWM control, even if there exists a phase difference between carrier wave and voltage command, low order harmonics would not increase. This is due to the main feature of the PWM method of the instant invention that, irrespective of any phase difference between carrier wave and voltage command, the command voltage can be reflected precisely on a resultant pulse width.

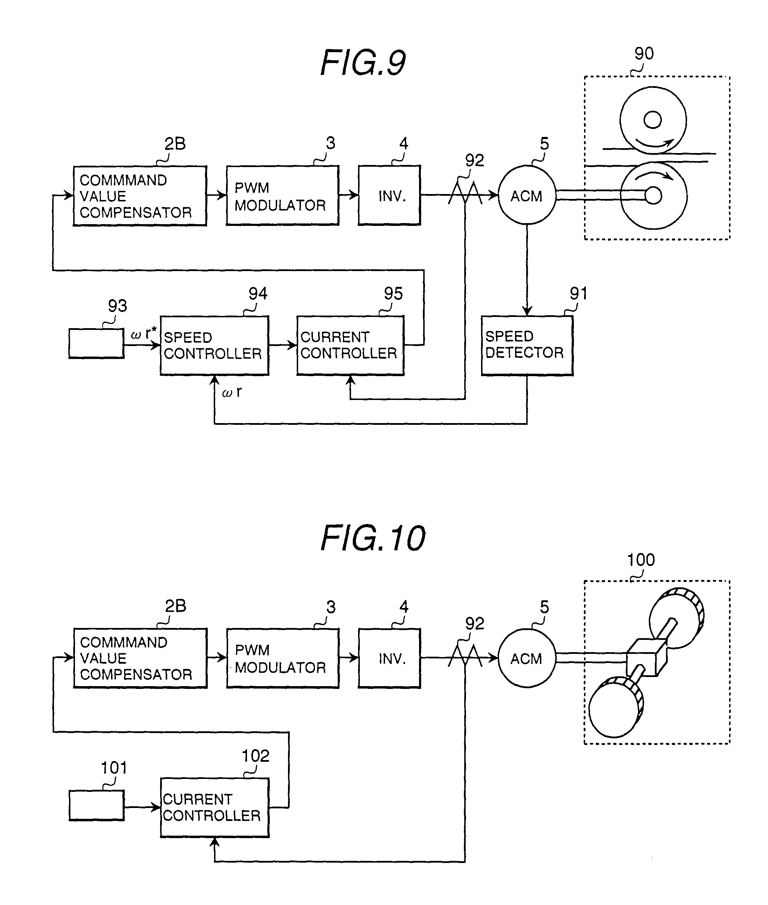

With reference to Fig. 9, there is described still another embodiment of the command value compensator of the invention which is applied to an inverter-controlled mill drive system. In the drawing of Fig. 9, numerals and symbols 2B, 3, 4, 5 depict the same constituent elements as indicated in Fig. 4 with the same numbering. Other numerals depict other constituent elements as follows. 90:mill rolls which are driven by motor 5, 91:speed detector which detects the number of revolutions of the motor $\omega$r, 92:current detector for detecting current of motor 5, 93:speed command generator for generating speed command $\omega$r*, 94:speed controller which outputs a current command control input so that $\omega$r coincides with $\omega$r*, and 95:current controller which outputs a current command control input so that a motor current coincides with an output from 94.

This embodiment of the invention is applicable to a system which drives mill rolls 90 through vector control of the motor 5. Presently, a large number of inverter-controlled ac motors are used in the iron and steel process lines. In particular, for a drive unit for driving a main mill machine, a large capacity, low torque pulsation and high response control system is required to ensure mill precision, therefore, further improvement in efficiency and compactness of the control system is desired. In order to manufacture a large capacity converter, a large capacity switching element such as GTO or the like is necessary to be used. In this case, however, since its carrier frequency cannot be raised, there occur such problems that low order harmonics increase, and beat phenomenon takes place. In addition, since the overall capacity of the equipment is large, switching loss cannot be ignored, and which will result in a decrease in the overall efficiency and a large size of equipment. In order to ensure a high efficiency of operation, it is desirable to drive with as low switching or low carrier frequency as possible.

The mill drive system depicted in Fig. 9, since it can suppress low order harmonics and beat phenomenon even with a low carrier frequency, can realize a high efficiency of operation and compactness of equipment while ensuring precision of mill.

With reference to Fig. 10, another embodiment of the command value compensator of the invention which is applied to a drive system for driving electric cars or electric vehicles is described below.

In Fig. 10, numerals and symbols 2B, 3, 4, 5. 92 depict the same constituent components with identical numbering as shown in Fig. 9. Other numerals depict other constituent elements as follows. 100:drive unit for driving an electric car or vehicle, 101:current command generator for generating a current command corresponding to a required drive torque, and 102:current controller which outputs an appropriate voltage so that the motor current coincides with the command value.

For example, with the electric vehicle, in order to utilize its battery energy as long as possible, it becomes necessary to use a high efficiency inverter. Further, in order to reduce the weight, compact equipment as small as possible is desired. In addition, since inclusion of low frequency pulsation such as beat in the generated torque will affect the comfort of drive, a low torque pulsation motor drive is required.

According to the embodiment of the invention depicted in Fig. 10, switching loss can be reduced by lowering its carrier frequency, thereby a more compact control system can be provided. At the same time, low frequency torque pulsation such as beat can be suppressed as well.

Further, as to the electric cars likewise, the same advantage and effect as in the electric vehicle can be obtained, that is, a compact and light-weight control system capable of suppressing beat or the like can be provided.

However, in the case of electric cars where such a high response as required in the mill drive system is not required and its motor is often driven by an open loop control such as a V/F control method, a synchronous PWM control method is utilized rather for its PWM control. In this case, its PWM control is performed by modifying the frequency ratio between carrier frequency and voltage command. However, changes in the carrier frequency will accompany ear-offending electromagnetic noise which must be solved. In order to solve this problem it is effective to fix the carrier frequency at a point where electromagnetic noise is minimum, then to change to an asynchronous PWM control mode. By the conventional asynchronous PWM control method alone, the problems of beat or the like cannot be solved, however, when the car drive system of the invention is applied, an effective solution to prevent the beat phenomenon and to reduce the electromagnetic noise can be realized.

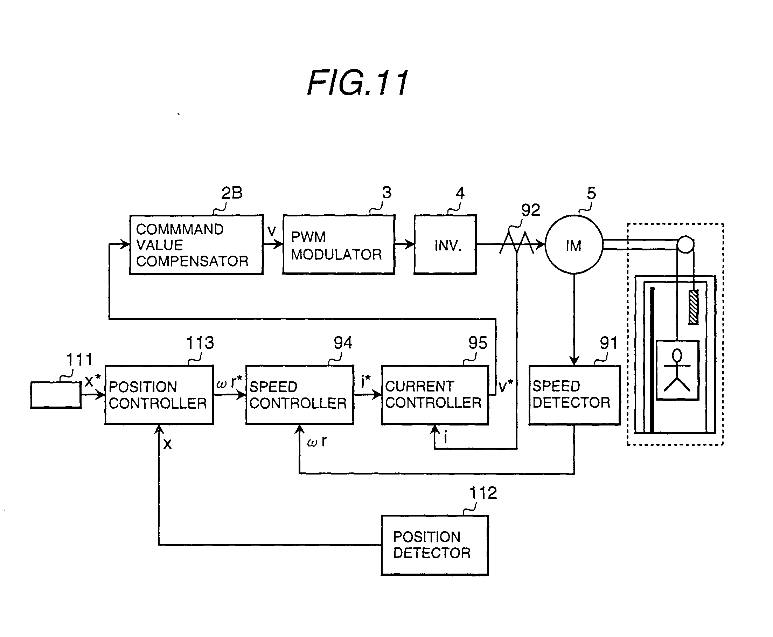

With reference to Fig. 11, there is indicated a still more embodiment of the command value compensator of the invention which is applied to an elevator drive system. In Fig. 11, numerals 2B, 3, 4, 5, 91, 94 and 95 designate the same components as indicated in Fig. 9 with the same numbering. Other numerals depict other components as follows. 110:elevator drive system including cars, 111:position command generator which produces position command x* to cars, 112:position detector which detects position x of each car, and 113:position controller which outputs speed command ωr* so that x coincides with x*.

In this embodiment of Fig. 11, in order to carry out position control of elevator cars, speed control and torque current control to the motor are performed in a minor control loop, then finally in voltage command compensator 2B, a command value compensation is applied.

With respect to the most of elevator drive systems nowadays, with an increasing speed of elevators nowadays, the capacity of inverters is increasing. Further, along with the increasing speed of operation, vibration of cars has become an issue which cannot be ignored. Therefore, it is required to devise an appropriate control system which will permit least low frequency components due to beat or the like to be included in its drive system. Further, in order to make most use of the space in building, a compact drive unit as small as possible is desired.

The elevator drive system as indicated in Fig. 11 according to the invention will be able to provide a compact drive system which combines technical features of large capacity, high efficiency of operation and suppression of beat phenomenon or the like as well.

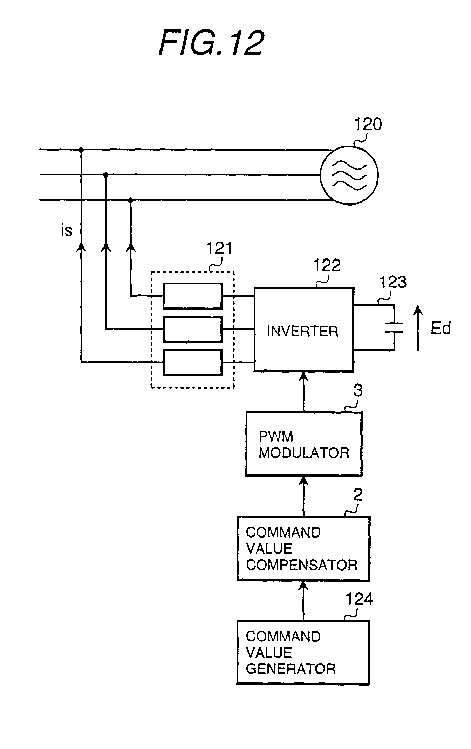

Further, with reference to Fig. 12, there is set forth still more embodiment of the command value compensator of the invention which is applied to a static var compensating system in an electric power system (hereinafter referred to as SVC). Respective numerals designate constituent components as follows. 120:power supply system, 121:ac reactor, 122:main circuit of SVC using self-extinct elements such as GTO, 123:capacitor on the dc side, and 124: command value generator which computes an input voltage command for 122. 2B and 3 designate the same components with the same numbering indicated in Fig. 4

In order to adjust a var current component in the power system, an appropriate var current component (is) to be injected into the power system is computed in this var compensating system on the basis of the phase, amplitude and a current flowing therethrough. In order to render var current component (is) a desired value, input voltage to conversion unit 122 is controlled. At this time, voltage command compensation of 2B is applied to the voltage command.

Normally, also in SVC, the same synchronous PWM mode as in the embodiment of Fig. 8 is used. However, by providing the voltage command compensation unit 2B of the invention, it becomes possible to enable an asynchronous PWM mode. Thereby, its control circuit can be simplified substantially, and an appropriate compensation current with minimum harmonics can be injected using a low carrier frequency. As a result, a high efficiency of operation, compactness of the equipment as well as a fast response can be achieved.

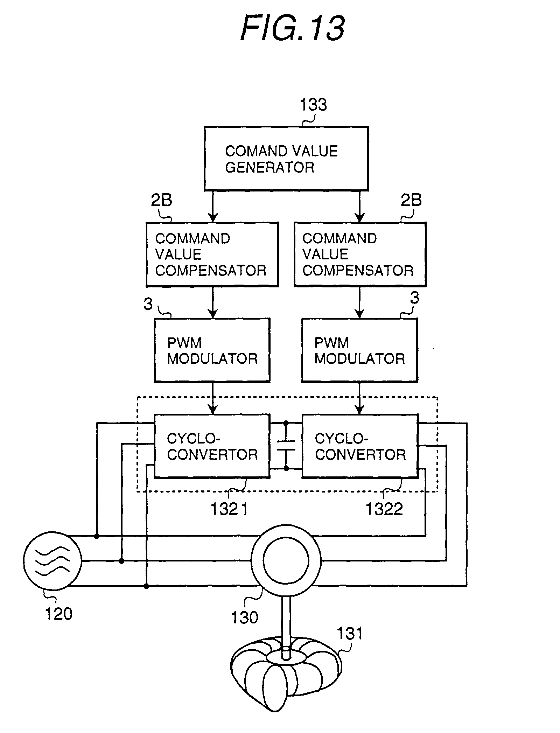

Set forth in Fig. 13 is still more embodiment of the command value compensating unit of the invention which is applied to a variable-speed pumped storage power plant which utilizes self-extinctive elements such as GTO. Numerals in the drawing depict respective constituent elements as follows. 120:power system, 130:motor-generator, 131: pump turbine, 132:cycloconverter unit for producing ac current having an arbitrary amplitude and frequency, 1321: rectifier for rectifying ac to dc, 1322:inverter for inverting dc to ac having an arbitrary amplitude, frequency and phase, 133:system control unit which controls the number of revolutions of a pump turbine and torque at an appropriate level so that stable system operation is maintained. 2B and 3 depict the same units with the same symbols indicated in Fig. 4.

The above-mentioned system has been developed to realize an economic auto frequency control (AFC), variable-speed operation of the pumped storage power plant. Since it is directed to a large capacity application, compactness and high efficiency operation of the conversion unit are strongly desired. It is further desired to reduce harmonic components flowing into the power system as much as possible. Through use of the PWM control of the invention, an excellent converter system can be implemented which features low power loss, minimum harmonics and fast response, thereby capable of maintaining the power system more stable.

All of the embodiments of the power conversion apparatus of the invention described hereinabove have been set forth by way of example of voltage type inverters or voltage type converters, however, it is not limited thereto, and any type of power conversion apparatus subject to PWM control, including a current type conversion apparatus which controls its output current in response to a sine wave command value can be applied within the scope of the invention.

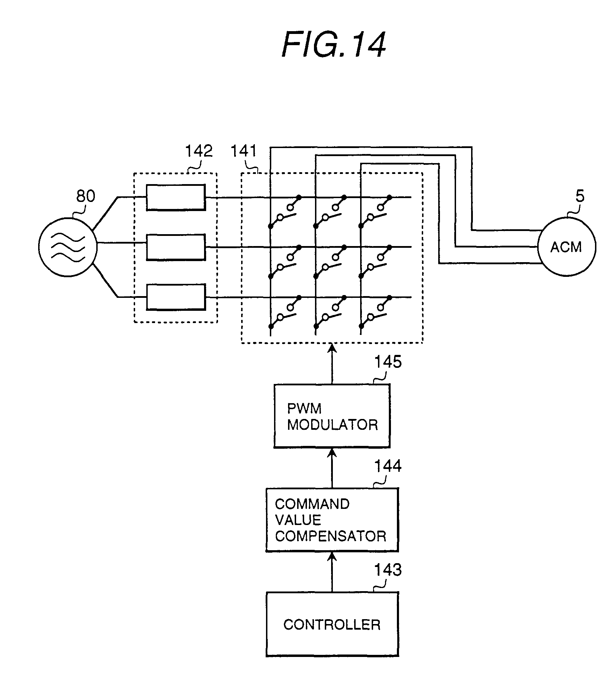

Further, in Fig. 14 is described another embodiment of the command value compensating unit of the invention which is applied to a control unit of a PWM cycloconverter which drives a motor. In the drawing of Fig. 14, respective numerals depict respective constituent components as follows. 141:main circuit of PWM cycloconverter including bidirectional switching elements made up from 9 pieces of switches such as GTO, 142:filter circuit, 143:controller for producing command signals to 9 pieces of switches so as to control the number of revolutions and power factor of the motor, 144:command value compensator for computing an average value of command values for each period of sampling according to the command value compensating method of the invention, 145:pulse width modulator which outputs a pulse in response to the compensated command value, 5: ac motor, and 80:three-phase ac power supply.

Generally, a PWM cycloconverter which includes no dc portion has such advantages and merits that it can be provided in a more compact type compared to an AC-AC converter which has a combined arrangement of a converter and an inverter, and that it has a high efficiency of operation due to a reduced number of elements. However, since this type of system utilizes ac power supply which changes with time to synthesize an output voltage, in principle, it must depend on a fast speed switching (high carrier frequency), which is not suitable for a large capacity power converter.

According to the system of Fig. 14, however, where the command value compensator is provided to cope with the changes in the power supply voltage, a low speed switching becomes possible. Thereby, a large capacity and high efficiency of operation is realized, thus substantially broadening the field of application of the PWM cycloconverters.

The preferred embodiments of the invention have been described hereinabove, in particular, by way of examples in which the command value is a sine wave, however, it is not limited thereto, and any type of waves can be applied within the scope of the invention provided that its average value can be estimated.

According to the present invention, an improved PWM control unit can be realized which can suppress increases in the low order harmonics and occurrence of beat phenomenon even at a lower carrier frequency.

Further, any system using the PWM control unit of the invention can achieve a higher efficiency of operation since the switching frequency of the converter can be lowered, and at the same time can prevent the control response from retarding since the asynchronous PWM control may be adopted at lower switching frequencies.

**Claims**

1. A PWM control apparatus having a command value generator, a pulse width modulator which, in response to a command signal from said command value generator, computes a pulse wave to be output on the basis of said command signal and a carrier waveform, and a power conversion unit including semiconductor elements which are driven by said pulse wave, further including:

   means for generating said command signal by sampling said command value in successive time periods of specified length $\Delta t$,
   said pulse width modulator being arranged to compute said pulse wave to be output in response to said means for generating said command signal;

   **characterised in that**:
   said means for generating said command signal is arranged to sample said command value at least twice in each successive time period, to compute an average value of said command value over each successive time period $\Delta t$ on the basis of said sampling, and to generate said command signal for each successive time period $\Delta t$ on the basis of each said average value so that said pulse width modulator computes said pulse wave to be output in response to the successive average values of said command value.

2. PWM control apparatus according to claim 1, wherein said means for compensating command value is adapted to compute an average value of said command value in said period specified $\Delta t$ on the basis of an amplitude and a phase of said command value output from said command value generator.

3. PWM control apparatus according to claim 1, **characterized by** comprising:

a triangle wave carrier generator which generates a triangle wave carrier signal having a cycle which is n times (n is integer) said period specified Δt, wherein,

said means for compensating said command value is adapted to compute an average value of said command value at every sampling thereof within a period defined by a half cycle of said triangle wave carrier signal, i. e., from a plus peak to a minus peak or vice versa, and wherein,

said pulse width modulator is adapted to compare said average value with said triangle wave carrier thereby to compute said pulse wave to be output.

4. PWM control apparatus according to claim 2 comprising a coordinate transformation unit which in response to an amplitude and a phase of a command value from said command generator transforms same into an ac quantity command value, and wherein said command value compensating means is adapted to compute an average value of said ac quantity command value within each of said period Δt by shifting the phase of transformation in said coordinate transformation unit.

5. PWM control apparatus according to claim 4 wherein said command value compensating means is adapted to calculate a start phase and terminate phase of said command value corresponding to a start time and terminate time of each of said period Δt, execute coordinate-transformation of said command value by shifting 90 degrees relative to these two phases respectively, dividing a difference between two transformed command values by an incremental phase angle of said command value corresponding to each of said period Δt, said value obtained above being input to said pulse width modulator.

6. A motor drive system having an ac motor, an electric conversion unit for driving said ac motor, a PWM controller for controlling said electric conversion unit, and a motor controller for producing a command value to said PWM controller, wherein said PWM controller comprises either one of PWM control apparatus as claimed in claims 1-5.

7. An ac motor drive system having an inverter for outputting ac power, an ac motor to be driven by said inverter, means for estimating or sensing the number of revolutions of the ac motor, means for producing a command to influence the number of revolutions, means for producing a command to said inverter so that an estimated or sensed value of the number of revolutions coincides with said command value, and PWM control means for controlling the inverter in response to said command, wherein

said PWM control means **characterized by** comprising either one of said PWM control apparatus as claimed in claims 1-5.

8. Rectifying apparatus having a power converter which is supplied a power from an ac power supply and converts said ac power into a dc power, means for producing a command value to control at least an input power factor of said power converter or a dc power voltage (or current) to be converted by said power converter, and PWM control means for controlling said power converter on the basis of said command value, wherein

said PWM control means is **characterized by** comprising either one of PWM control apparatuses as claimed in claims 1-5.

9. A mill drive system having a power inverter which outputs an ac power, an ac motor which is driven by said power inverter, a mill machine which drives mill rolls with said ac motor, and PWM control means for controlling said power inverter to apply speed control to said mill rolls, wherein

said PWM control means is **characterized by** comprising either one of PWM control apparatuses as claimed in claims 1-5.

10. An electric car or vehicle having a power inverter which outputs an ac power, an ac motor which is driven by said power inverter, and PWM control means for controlling said power inverter, wherein

said PWM control means is **characterized by** comprising either one of said PWM control apparatuses as claimed in claims 1 to 5.

11. An elevator drive system having a power inverter which outputs an ac power, an ac motor which is driven by said power inverter, an elevator having said ac motor as its drive source, and PWM control means for controlling said power inverter, wherein

said PWM control means is **characterized by** comprising either one of PWM control apparatuses as claimed in claims 1-5.

12. A reactor power (var) compensation apparatus connected to an electric power system, having a power converter

EP 0 732 798 B1

connected to said power system for converting ac to dc, a command value generator which computes and produces a command value to said power converter so as to control a power factor of said electric power system, and a PWM controller for controlling said power converter, wherein

said PWM control means is **characterized by** comprising either one of PWM control apparatuses as claimed in claims 1-5.

**13.** A variable-speed pumped storage power plant system having a pump turbine, a motor generator which is driven by said pump turbine, a power conversion unit for exciting said motor generator by ac, PWM control means for controlling said power conversion unit, and a command value generator for producing a command value to said PWM control means so as to control the number of revolutions of said motor-generator, wherein

said PWM control means is **characterized by** comprising either one of PWM control apparatuses as claimed in claims 1-5.

**14.** In an ac-ac converter system which directly converts an ac power input to an ac output having an arbitrary frequency, amplitude and phase,

an improved PWM cycloconverter system comprises either one of PWM control apparatuses as claimed in claims 1-5 to obtain said arbitrary frequency, amplitude and phase.

**Patentansprüche**

**1.** PWM-Steuervorrichtung mit einem Befehlswerterzeuger, einem Pulsbreitenmodulator, der in Antwort auf ein Befehlssignal von dem Befehlswerterzeuger eine auszugebende Pulswelle aufgrund des Befehlssignals und einer Trägerwellenform berechnet, und einer Leistungswandlereinheit mit Halbleiterelementen, die von der Pulswelle angesteuert werden, weiterhin aufweisend:

eine Einrichtung zur Erzeugung des Befehlssignals durch Abtasten des Befehlswerts in aufeinanderfolgenden Zeitspannen bestimmter Länge $\Delta t$,
wobei der Pulsbreitenmodulator eingerichtet ist, die auszugebende Pulswelle in Antwort auf die Einrichtung zur Erzeugung des Befehlssignals zu berechnen,

**dadurch gekennzeichnet, daß**
die Einrichtung zur Erzeugung des Befehlssignais eingerichtet ist, den Befehlswert in jeder der aufeinanderfolgenden Zeitspannen mindestens zweimal abzutasten, um über jede der aufeinanderfolgenden Zeitpannen $\Delta t$ aufgrund des Abtastens einen mittleren Wert des Befehlswerts zu berechnen, und das Befehlssignal für jede der aufeinanderfolgenden Zeitspannen $\Delta t$ aufgrund des jeweiligen Mittelwerts zu erzeugen, so daß der Pulsbreitenmodulator die auszugebende Pulswelle in Antwort auf die aufeinanderfolgenden Mittelwerte des Befehlswerts berechnet.

**2.** Vorrichtung nach Anspruch 1, wobei die Einrichtung zur Kompensation eines Befehlswerts eingerichtet ist, einen Mittelwert des Befehlswerts in der bestimmten Zeitspanne $\Delta t$ aufgrund einer Amplitude und einer Phase des von dem Befehlswerterzeuger ausgegebenen Befehlswerts zu berechnen.

**3.** Vorrichtung nach Anspruch 1, aufweisend:

einen Dreieckswellen-Trägererzeuger, der ein Dreieckswellen-Trägersignal mit einem Zyklus von n mal (n ist eine ganze Zahl) der bestimmten Zeitspanne $\Delta t$ erzeugt,
wobei die Einrichtung zur Kompensation des Befehlswerts eingerichtet ist, einen Mittelwert des Befehlswerts zu jeder seiner Abtastungen innerhalb einer durch den halben Zyklus des Dreieckswellen-Trägersignals festgelegten Zeitspanne, d.h. von einer Pulsspitze zu einer negativen Spitze oder umgekehrt zu berechnen, und
wobei der Pulsbreitenmodulator eingerichtet ist, den Mittelwert mit dem Dreieckswellen-Träger zu vergleichen, um die auszugebende Pulswelle zu berechnen.

**4.** Vorrichtung nach Anspruch 2 mit einer Koordinatentransformationseinheit, die in Antwort auf eine Amplitude und eine Phase eines Befehlswerts von dem Befehlserzeuger diese in einen Wechselstrom-Mengenbefehlswert umwandelt, wobei die Befehlswert-Kompensationseinrichtung eingerichtet ist, einen Mittelwert des Wechselstrom-Mengenbefehiswerts innerhalb jeder der Zeitspannen $\Delta t$ zu berechnen, indem die Transformationsphase in der Koordinatentransformationseinheit verschoben wird.

12

**5.** Vorrichtung nach Anspruch 4, wobei die Befehlswert-Kompensationseinrichtung eingerichtet ist, entsprechend einer Startzeit und einer Endzeit einer jeweiligen Zeitspanne Δt eine Startphase und eine Endphase des Befehlswerts zu berechnen, eine Koordinatentransformation des Befehlswerts durch entsprechende Verschiebung um 90° relativ zu diesen beiden Phasen auszuführen und eine Differenz zwischen zwei transformierten Befehlswerten durch einen inkrementellen Phasenwinkel des Befehlswerts entsprechend der jeweiligen Zeitspanne Δt zu dividieren, wobei der oben erhaltene Wert in den Pulsbreitenmodulator eingegeben wird.

**6.** Motorangetriebenes System mit einem Wechselstrommotor, einer elektrischen Wandlereinheit zum Antrieb des Wechselstrommotors, einer PWM-Steuereinheit zum Steuern der elektrischen Wandlereinheit und einer Motorsteuerung zum Erzeugen eines Befehlswerts für die PWM-Steuereinheit, wobei die PWM-Steuereinheit eine PWM-Steuervorrichtung nach einem der Ansprüche 1 bis 5 beintaltet.

**7.** Wechselstrommotor-Antriebssystem mit einem Wechselrichter zum Ausgeben von Wechselstromleistung, einem von dem Wechselrichter anzutreibenden Wechselstrommotor, einer Einrichtung zum Schätzen oder Erfassen der Drehzahl des Wechselstrommotors, einer Einrichtung zur Erzeugung eines Befehls, um die Drehzahl zu beeinflussen, einer Einrichtung zum Erzeugen eines Befehls an den Wechselrichter, so daß ein erfaßter oder geschätzter Wert der Drehzahl mit dem Befehlswert übereinstimmt, und einer PWM-Steuereinrichtung zum Steuern des Wechselrichters in Antwort auf den Befehl,
wobei die PWM-Steuereinrichtung durch eine PWM-Steuervorrichtung nach einem der Ansprüche 1 bis 5 gekennzeichnet ist.

**8.** Gleichrichtervorrichtung mit einem Leistungswandler, der mit Leistung von einer Wechselstrom-Leistungsquelle versorgt wird und die Wechselstromleistung in Gleichstrom-Leistung umwandelt, einer Einrichtung zum Erzeugen eines Befehlswerts, um mindestens einen Eingangs-Leistungsfaktor des Leistungswandlers oder eine Gleichstromleistungs-Spannung (oder einen entsprechenden Strom), die von dem Leistungswandler zu wandeln sind, zu steuern, und einer PWM-Steuereinrichtung zum Steuern des Leistungswandlers aufgrund des Befehlswerts,
wobei die PWM-Steuereinrichtung durch eine PWM-Steuervorrichtung nach einem der Ansprüche 1 bis 5 gekennzeichnet ist.

**9.** Walzantriebssystem mit einem Leistungs-Wechselrichter, der Wechselstromleistung ausgibt, einem Wechselstrommotor, der von dem Leistungs-Wechselrichter angesteuert wird, einer Walzmaschine, die mit dem Wechselstrommotor Walzen antreibt, und einer PWM-Steuereinrichtung zum Steuern des Leistungs-Wechselrichters, um die Walzen einer Geschwindigkeitssteuerung zu unterwerfen,
wobei die PWM-Steuereinrichtung durch eine PWM-Steuervorrichtung nach einem der Ansprüche 1 bis 5 gekennzeichnet ist.

**10.** Elektrowagen oder -fahrzeug mit einem Leistungs-Wechselrichter, der Wechselstromleistung ausgibt, einem Wechselstrommotor, der von dem Leistungs-Wechselrichter angesteuert wird, und einer PWM-Steuereinrichtung zum Steuern des Leistungs-Wechselrichters,
wobei die PWM-Steuereinrichtung durch eine PWM-Steuervorrichtung nach einem der Ansprüche 1 bis 5 gekennzeichnet ist.

**11.** Aufzugsantriebssystem mit einem Leistungs-Wechselrichter, der eine Wechselstromleistung ausgibt, einem Wechselstrommotor, der von dem Leistungs-Wechaelrichter angesteuert wird, einem Aufzug mit dem Wechselstrommotor als Antriebsquelle und einer PWM-Steuereinrichtung zum Steuern des Leistungs-Wechselrichters,
wobei die PWM-Steuereinrichtung durch eine PWM-Steuervorrichtung nach einem der Ansprüche 1 bis 5 gekennzeichnet ist.

**12.** Reaktanzleistungs-(Var)-Kompensationsvorrichtung, die mit einem elektrischen Leistungssystem verbunden ist und einen mit dem Leistungssystem verbundenen Leistungswandler zur Wandlung von Wechselstrom zu Gleichstrom, einen Befehlswerterzeuger, der einen Befehlswert für den Leistungswandler berechnet und erzeugt, um einen Leistungsfaktor des elektrischen Leistungssystems zu steuern, und eine PWM-Steuereinheit zum Steuern des Leistungswandlers aufweist,
wobei die PWM-Steuereinrichtung durch eine PWM-Steuervorrichtung nach einem der Ansprüche 1 bis 5 gekennzeichnet ist.

**13.** Pumpspeicher-Kraftwerkssystem variabler Geschwindigkeit mit einer Pumpenturbine, einem Motorgenerator, der von der Pumpenturbine angetrieben wird, einer Leistungswandlereinheit zum Erregen des Motorgenerators durch Wechselstrom, einer PWM-Steuereinrichtung zum Steuern der Leistungswandlereinheit und einem Befehlswerterzeuger zur Erzeugung eines Befehlswerts für die PWM-Steuereinrichtung, um die Drehzahl des Motorgenerators zu steuern,

wobei die PWM-Steuereinrichtung durch eine PWM-Steuervorrichtung nach einem der Ansprüche 1 bis 5 gekennzeichnet ist.

14. Wechselstrom-Wechselstrom-Wandlersystem, das eine Wechselstrom-Eingangsleistung direkt in eine Wechselstrom-Ausgabe frei wählbarer Frequenz, Amplitude und Phase umwandelt,

wobei ein verbessertes PWM-Steuerumrichtersystem eine PWM-Steuervorrichtung nach einem der Ansprüche 1 bis 5 aufweist, um die wählbare Frequenz, Amplitude und Phase zu erhalten.

**Revendications**

1. Dispositif de commande à modulation de largeur d'impulsions (PWM) ayant un générateur de valeurs de commande, un modulateur de largeur d'impulsions qui, en réponse à un signal de commande provenant dudit générateur de valeurs de commande, calcule un signal impulsionnel à délivrer en sortie sur la base dudit signal de commande et d'une forme d'onde porteuse, et une unité de conversion de courant incluant des éléments à semiconducteurs qui sont commandés par ledit signal impulsionnel, incluant en outre :

des moyens pour générer ledit signal de commande en échantillonnant ladite valeur de commande dans des périodes de temps successives de longueur spécifiée $\Delta t$,
ledit modulateur de largeur d'impulsions étant conçu pour calculer ledit signal impulsionnel à délivrer en sortie en réponse auxdits moyens pour générer ledit signal de commande,

**caractérisé en ce que** :

lesdits moyens pour générer ledit signal de commande sont conçus pour échantillonner ladite valeur de commande au moins deux fois dans chaque période de temps successive, pour calculer une valeur moyenne de ladite valeur de commande sur chaque période de temps $\Delta t$ successive sur la base dudit échantillonnage, et pour générer ledit signal de commande pour chaque période de temps $\Delta t$ successive sur la base de chaque valeur moyenne de sorte que ledit modulateur de largeur d'impulsions calcule ledit signal impulsionnel à délivrer en sortie en réponse aux valeurs moyennes successives de ladite valeur de commande.

2. Dispositif de commande PWM selon la revendication 1, dans lequel lesdits moyens pour compenser la valeur de commande sont adaptés pour calculer une valeur moyenne de ladite valeur de commande dans ladite période spécifiée $\Delta t$ sur la base d'une amplitude et d'une phase de ladite valeur de commande délivrée en sortie par ledit générateur de valeurs de commande.

3. Dispositif de commande PWM selon la revendication 1, **caractérisé en ce qu'**il comporte :

un générateur de porteuse d'ondes triangulaires qui génère un signal de porteuse d'ondes triangulaires ayant un cycle qui est égal à n fois (n est un nombre entier) ladite période spécifiée $\Delta t$, dans lequel,
lesdits moyens pour compenser ladite valeur de commande sont adaptés pour calculer une valeur moyenne de ladite valeur de commande à chaque échantillonnage de celle-ci pendant une période définie par un demicycle dudit signal de porteuse d'ondes triangulaires, c'est-à-dire entre une crête plus et une crête moins ou vice versa, et dans lequel,
ledit modulateur de largeur d'impulsions est adapté pour comparer ladite valeur moyenne à ladite porteuse d'ondes triangulaires de manière à calculer ledit signal impulsionnel à délivrer en sortie.

4. Dispositif de commande PWM selon la revendication 2, comportant une unité de transformation de coordonnée qui, en réponse à une amplitude et à une phase d'une valeur de commande provenant dudit générateur de commande, transforme celle-ci en une valeur de commande de quantité de courant alternatif, et dans lequel lesdits moyens de compensation de valeur de commande sont adaptés pour calculer une valeur moyenne de ladite valeur de commande de quantité de courant alternatif dans chaque période $\Delta t$ en décalant la phase de transformation dans ladite unité de transformation de coordonnée.

5. Dispositif de commande PWM selon la revendication 4, dans lequel lesdits moyens de compensation de valeur de commande sont adaptés pour calculer une phase de début et une phase de fin de ladite valeur de commande correspondant à un temps de début et à un temps de fin de chaque période Δt, exécuter une transformation de coordonnée de ladite valeur de commande en effectuant un décalage de 90 degrés par rapport à ces deux phases respectivement, en divisant une différence entre deux valeurs de commande transformées par un angle de phase incrémental de ladite valeur de commande correspondant à chaque période Δt, ladite valeur obtenue ci-dessus étant délivrée en entrée audit modulateur de largeur d'impulsions.

6. Système d'entraînement de moteur ayant un moteur à courant alternatif, une unité de conversion électrique pour entraîner ledit moteur à courant alternatif, un contrôleur PWM pour commander ladite unité de conversion électrique, et un contrôleur de moteur pour produire une valeur d'instruction audit contrôleur PWM, dans lequel ledit contrôleur PWM comporte l'un ou l'autre des dispositifs de commande PWM selon les revendications 1 à 5.

7. Système d'entraînement de moteur à courant alternatif ayant un onduleur pour délivrer en sortie un courant alternatif, un moteur à courant alternatif à entraîner par ledit onduleur, des moyens pour estimer ou détecter le nombre de tours du moteur à courant alternatif, des moyens pour produire une instruction pour influencer le nombre de tours, des moyens pour produire une instruction audit onduleur de sorte qu'une valeur estimée ou détectée du nombre de tours coïncide avec ladite valeur d'instruction, et des moyens de commande PWM pour commander l'onduleur en réponse à ladite instruction, dans lequel
    lesdits moyens de commande PWM sont **caractérisés en ce qu'**ils comportent l'un ou l'autre desdits dispositifs de commande PWM selon les revendications 1 à 5.

8. Dispositif de redressement ayant un convertisseur de courant qui est alimenté par un courant provenant d'une alimentation électrique en courant alternatif et convertit ledit courant alternatif en un courant continu, des moyens pour produire une valeur d'instruction pour commander au moins un facteur de puisance d'entrée dudit convertisseur de courant ou une tension de courant continu (ou courant) à convertir par ledit convertisseur de courant, et des moyens de commande PWM pour commander ledit convertisseur de courant sur la base de ladite valeur de commande, dans lequel
    lesdits moyens de commande PWM sont **caractérisés en ce qu'**ils comportent l'un ou l'autre des dispositifs de commande PWM selon les revendications 1 à 5.

9. Système d'entraînement de laminoir ayant un onduleur de puissance qui délivre en sortie un courant alternatif, un moteur à courant alternatif qui est entraîné par ledit onduleur de puissance, une machine de laminoir qui entraîne des rouleaux de laminoir à l'aide dudit moteur à courant alternatif, et des moyens de commande PWM pour commander ledit onduleur de puissance pour appliquer une commande de vitesse auxdits rouleaux de laminoir, dans lequel
    lesdits moyens de commande PWM sont **caractérisés en ce qu'**ils comportent l'un ou l'autre des dispositifs de commande PWM selon les revendications 1 à 5.

10. Véhicule ou voiture électrique ayant un onduleur de puissance qui délivre en sortie un courant alternatif, un moteur à courant alternatif qui est entraîné par ledit onduleur de puissance, et des moyens de commande PWM pour commander ledit onduleur de puissance, dans lequel
    lesdits moyens de commande PWM sont **caractérisés en ce qu'**ils comportent l'un ou l'autre desdits dispositifs de commande PWM selon les revendications 1 à 5.

11. Système d'entraînement d'ascenseur ayant un onduleur de puissance qui délivre en sortie un courant alternatif, un moteur à courant alternatif qui est entraîné par ledit onduleur de puissance, un ascenseur ayant ledit moteur à courant alternatif en tant que source d'entraînement, et des moyens de commande PWM pour commander ledit onduleur de puissance, dans lequel
    lesdits moyens de commande PWM sont **caractérisés en ce qu'**ils comportent l'un ou l'autre des dispositifs de commande PWM selon les revendications 1 à 5.

12. Dispositif de compensation d'énergie de réacteur (var) relié à un système de distribution d'énergie électrique, ayant un convertisseur de courant relié audit système de distribution d'énergie pour convertir un courant alternatif en courant continu, un générateur de valeurs d'instruction qui calcule et produit une valeur d'instruction audit convertisseur de courant de manière à commander un facteur de puissance dudit système de distribution d'énergie électrique, et un contrôleur PWM pour commander ledit convertisseur de courant, dans lequel
    lesdits moyens de commande PWM sont **caractérisés en ce qu'**ils comportent l'un ou l'autre des dispositifs de commande PWM selon les revendications 1 à 5.

**13.** Système d'usine électrique de barrage à pompage à vitesse variable ayant une turbine-pompe, un moto-générateur qui est entraîné par ladite turbine-pompe, une unité de conversion de courant pour exciter ledit moto-générateur à l'aide d'un courant alternatif, des moyens de commande PWM pour commander ladite unité de conversion de courant, et un générateur de valeurs d'instruction pour produire une valeur d'instruction auxdits moyens de commande PWM de manière à commander le nombre de tours dudit moto-générateur, dans lequel

lesdits moyens de commande PWM sont **caractérisés en ce qu'**ils comportent l'un ou l'autre des dispositifs de commande PWM selon les revendications 1 à 5.

**14.** Système convertisseur courant alternatif-courant alternatif qui convertit directement une entrée de courant alternatif en une sortie de courant alternatif ayant une fréquence, une amplitude et une phase arbitraires, comportant

un système cyclo-convertisseur PWM perfectionné comportant l'un ou l'autre des dispositifs de commande PWM selon les revendications 1 à 5 pour obtenir lesdites fréquence, amplitude et phase arbitraires.

## FIG.1

## FIG.2

●: SAMPLING POINT P

v*(t)···COMMAND VALUE

COMPUTE AVERAGE VALUE

(a) CONVENTIONAL

(b) INVENTION

EP 0 732 798 B1

# FIG.3

●: SAMPLING POINT P

(a)

(b)

18

## FIG.4

## FIG.5

# FIG.6

# FIG.7

# FIG.8

EP 0 732 798 B1

# FIG.9

COMMMAND VALUE COMPENSATOR `2B`

PWM MODULATOR `3`

INV. `4`

`92`

ACM `5`

`90`

`93`

$\omega r^*$ SPEED CONTROLLER `94`

CURRENT CONTROLLER `95`

SPEED DETECTOR `91`

$\omega r$

# FIG.10

COMMMAND VALUE COMPENSATOR `2B`

PWM MODULATOR `3`

INV. `4`

`92`

ACM `5`

`100`

`101`

CURRENT CONTROLLER `102`

23

## FIG.11

# FIG.12

120

is

121

122    123

INVERTER    Ed

3

PWM
MODULATOR

2

COMMAND
VALUE
COMPENSATOR

124

COMMAND
VALUE
GENERATOR

# FIG.13

133
COMMAND VALUE GENERATOR

2B
COMMAND VALUE COMPENSATOR

2B
COMMAND VALUE COMPENSATOR

3
PWM MODULATOR

3
PWM MODULATOR

CYCLO-CONVERTOR

CYCLO-CONVERTOR

1321

1322

120

130

131

## FIG.14